(19) Europäisches Patentamt / European Patent Office / Office européen des brevets

(11) **EP 3 287 859 B1**

(12) **EUROPEAN PATENT SPECIFICATION**

(45) Date of publication and mention of the grant of the patent:
**25.01.2023 Bulletin 2023/04**

(21) Application number: **16185731.3**

(22) Date of filing: **25.08.2016**

(51) International Patent Classification (IPC):
**G05B 23/02** (2006.01)

(52) Cooperative Patent Classification (CPC):
**G05B 23/0275**

(54) **METHODS AND SYSTEMS FOR DETECTING FAULTS IN VEHICLE CONTROL SYSTEMS**

VERFAHREN UND SYSTEME ZUR DETEKTION VON FEHLERN IN FAHRZEUGSTEUERUNGSSYSTEMEN

PROCÉDÉS ET SYSTÈMES DE DÉTECTION DES DÉFAUTS DANS DES SYSTÈMES DE COMMANDE DE VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.02.2018 Bulletin 2018/09**

(73) Proprietor: **Ningbo Geely Automobile Research & Development Co., Ltd.**
**Ningbo, Postcode 315336 (CN)**

(72) Inventor: **Palander, Michael**
**433 66 SÄVEDALEN (SE)**

(74) Representative: **Zacco Sweden AB**
**P.O. Box 5581**
**Löjtnantsgatan 21**
**114 85 Stockholm (SE)**

(56) References cited:
EP-A1- 2 082 375          EP-A1- 2 803 049
EP-B1- 2 082 375          EP-B1- 2 803 049
DE-A1-102010 008 471      US-A1- 2012 303 205

• Hess Rachel N: "Fields and Cyclic Codes for Error Detection", , 31 December 2014 (2014-12-31), pages 1-10, XP055806621, Retrieved from the Internet: URL:https://baylor-ir.tdl.org/bitstream/handle/2104/8894/Fields%20Essay.pdf?sequence=1&isAllowed=y [retrieved on 2021-05-21]

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical field

The invention relates to vehicle control systems, in particular methods and systems for detecting faults in vehicle control systems.

### Background

Modern vehicle control systems are comprised of a network of systems, subsystems and controllers interacting to control the various components of the vehicle. For example a vehicle control system could comprise subsystems associated with a domain of features of the vehicle such as vehicle dynamics. Each of these subsystems may comprise one or more electronic control units (ECUs) which are associated with a feature of the domain, for example the vehicle dynamics subsystem may comprise an ECU relating to braking. The subsystems also comprise functional units that are related to that domain subsystem. A functional unit could for example be a brake actuation sensor. The functional units are often interconnected which makes detecting and locating faults rapidly a challenge.

In DE102010008471, a method for detecting individual errors in system units by a diagnostic system is presented. The individual errors are transferred to a diagnostic management system by a coded error description i.e. diagnostic trouble code (DTC).

EP2082375 describe diagnosing of an entity having a plurality of components whose respective health statuses (s) are to be determined. An online diagnosis engine is adapted to execute a fault isolation algorithm and includes an input interface and a processing unit.

With such vehicle control systems comprising numerous subsystems communicating and controlling various aspects of the vehicle, testing and validation of large electronic control systems is of significant importance. Furthermore, the increasing numbers of features in vehicle control systems has in turn increased the proportion of vehicle production costs associated with control systems. A fault detection method and system for vehicle control system being able to detect faults efficiently and effectively during production and development would thus decrease production costs and increase vehicle reliability.

### Summary

Accordingly, the present invention preferably seeks to mitigate or eliminate one or more of the above-identified deficiencies in the art singly or in any combination and solves at least the above mentioned problems by providing a solution in accordance with the independent claims set forth below.

According to a first aspect, a method for detecting faults in a vehicle control system comprising functional units is provided. Each functional unit has an associated unique label in the form of a finite field element, and the method comprises calling each of the functional units, the call comprising a readable traversal value, and in case the functional unit is operating correctly, updating the traversal value based on the unique label of the currently called functional unit; and determining from the updated traversal value if any functional units are faulty by a comparison with an expected traversal value.

In an embodiment, in the case that the traversal value is not equal to the expected value, the method further comprises determining which functional units are faulty by a finite field element factorization algorithm.

The method may further comprise determining any missing unique label(s) by means of said finite field element factorization algorithm.

In an embodiment the method further comprises accessing a list, the list associating a descriptor of a functional unit to a unique label, to determine the descriptor of any faulty functional unit(s).

The traversal value may be the product of the traversal value in the call and the unique label of the currently called functional unit.

In an embodiment each unique finite field element is generated by a polynomial, preferably the polynomial is $g(X) = X^4 + X^3 + 1$.

Each unique label may correspond to a unique decimal form representation, each unique decimal form representation is a prime number. The unique decimal form representations are preferably associated according to the ascending sequence of prime numbers starting at the number 2.

A unique prime number, e.g. the prime number 1, may be excluded from the set of prime numbers forming the unique decimal form representations.

In an embodiment the vehicle control system comprises two or more functional units.

The vehicle control system may further comprise subsystems being associated with vehicle hardware, wherein the subsystems comprise the functional units, the method further comprising associating the functional units with the comprising subsystem.

In an embodiment a functional unit subset is selected from the functional units comprised in the vehicle control system, and the expected traversal value of the functional unit subset is the product of the unique label of each of the functional units comprised in the functional unit subset.

According to a second aspect, a method for providing at least one functional unit is provided. The method comprises assigning a unique label in the form of a finite field element to a functional unit.

According to a third aspect a controller for detecting faults in a vehicle control system comprising functional units is provided. Each of the functional units of the vehicle control system are assigned a unique label in the form of a finite field element. The controller for detecting faults comprises a means of calling the functional units wherein the call to the functional unit comprises a readable traversal value, a means of, in case the functional unit is operating correctly, updating the traversal value based on the unique label of the currently called functional unit, and a processing unit programmed to determine which if any of the functional units are faulty by a comparison between the updated traversal value and an expected traversal value.

In an embodiment, if the updated traversal value is not equal to the expected traversal value, the processing unit is further programmed to determine which functional units are faulty by a finite field element factorization algorithm.

According to a fourth aspect, a system comprising a hardware component of a vehicle being associated with one of more functional units and a controller according to the third aspect is provided.

**Brief description of drawings**

Further objects, features and advantages will appear from the following detailed description, with reference being made to the accompanying drawings, in which:

Fig. 1 is a schematic view of a method according to an embodiment;
Fig. 2 is a schematic view of a method according to another embodiment; and
Fig. 3 is a blocksheet diagram of the method according to an embodiment.

**Detailed description**

The following description of the invention concerns methods, controllers and systems for detecting faults in vehicle control systems comprising functional units having an associated unique label. The functional units may be associated with specific components of a vehicle. For instance, the functional units may be associated with those directly related to the movement of the vehicle, such as a break actuation sensor. The functional units may also be associated with components related to ancillary aspects of the vehicle such as a seat warming controller. Through the described methods, controllers and systems faults in one or more individual functional units can be detected and located efficiently and effectively. The vehicle control system can comprise one or more functional units, such as two or more. Functional units may in some embodiments be software implemented.

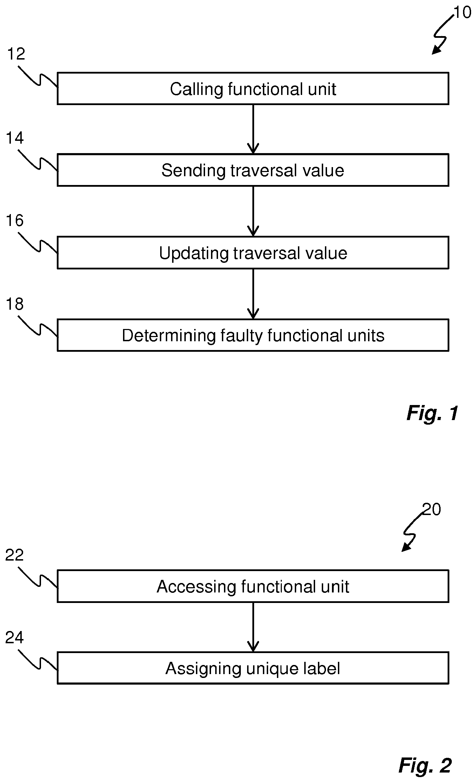

According to the various embodiments described herein, functional units are assigned a unique label to enable identification. Such method 20 is generally depicted in Fig. 2. The unique label can be assigned 24 to the functional unit during or prior to run-time, and preferably after accessing the functional unit 22. The unique label acts as an identifier of the functional unit throughout the fault detection method. The method of assigning the unique labels is to assign labels in the form of finite field elements, wherein each finite field element corresponds to a unique decimal form representation. Preferably, the unique decimal form representations are selected and associated according to the ascending sequence of prime numbers starting at the number 2. That is, the unique label of the first functional unit is assigned a finite field element representing the number 2, the unique label of the second functional unit is assigned a finite field element representing the number 3, the unique label of the third functional unit is assigned a finite field element representing the prime number 5, and so on. A finitie field element representing the prime number 1 is preferably not used as will be further explained below.

Each functional unit can be called during the fault detection method. The fault detection method 10 is schematically shown in Fig. 1. The call 12 to the functional unit comprises a traversal value. The traversal value is a value which can be both read and updated by the respective receiving functional unit. The traversal value which is provided 14 to the first functional unit during fault detection is a finite field element corresponding to the unique decimal form representation of the prime number "1".

On receiving the call, in the case that the receiving functional unit is operating correctly, the receiving functional unit can update 16 the traversal value to be equal to the product of the traversal value comprised in the call and the unique label of the currently called functional unit. The multiplication results in a product which is the product of the receiving functional unit's unique label and the product of all unique labels of the functional units previously called that were without error. The traversal value is then updated to be equal to the product.

A faulty functional unit which is an error state will not update the traversal value. The traversal value will thus be unchanged by a functional unit which is faulty.

The traversal value is then passed in a call to the next functional unit. The next functional unit repeats the multiplication process described above with its own unique label.

To determine if any of the functional units are faulty the traversal value can be compared to an expected traversal value. To determine 18 which functional units are in error a unique finite field element factorisation algorithm is used.

After being passed to one or more functional units the traversal value is compared to an expected traversal value. The expected traversal value may be the product of all of the unique labels of functional units in the system in which faults are to be detected.

If the traversal value is equal to the expected traversal value then no faults have been detected in the system.

If the traversal value is not equal to the expected traversal value then one or more faulty functional units have been detected.

To determine which functional unit is faulty a unique finite field element factorisation algorithm is used.

Before describing the finite field factorisation algorithm some general description of finite fields will be given.

A finite field, also commonly known as a Galois field, is a mathematical representation of a field containing a finite number of elements. The finite field of a certain order $q$ (where $q$ equals the number of elements) exists only when $q=p^k$, where $p$ is a prime number and $k$ is a positive integer. For polynomial factorization, there are efficient algorithms developed for factoring the polynomials over finite field. In particular, to study solvability by radicals of a polynomial equation $f(X) = 0$, we let $K$ be the field generated by the coefficients of $f(X)$, and let $F$ be a splitting field for $f(X)$ over $K$.

While Galois considered permutations of the roots that leave the coefficient field fixed, a modem approach is to consider the automorphisms determined by these permutations. It is noted that any automorphism of a field F must leave its prime sub field fixed.

**Proposition.** Let $F$ be an extension field of $K$. The set of all automorphisms $\phi : F \to F$ such that $\phi(a) = a$ for all $a$ in $K$ is a group under composition of functions.

**Definition.** Let $F$ be an extension field of $K$. The set $\{\theta \in Aut(F)|\theta(a) = a \,\forall a \in K\}$ is called the Galois group of $F$ over $K$, denoted by $GF(F/K)$.

**Definition.** Let $K$ be a field, let $f(X) \in K[X]$, and let $F$ be a splitting field for $f(X)$ over $K$. Then $GF(F/K)$ is called the Galois group of $f(X)$ over $K$, or the Galois group of the equation $f(X)= 0$ over $K$.

**Proposition.** Let $F$ be an extension field of $K$, and let $f(X) \in K[X]$. Then any element of $GF(F/K)$ defines a permutation of the roots of $f(X)$ that lie in $F$.

**Lemma.** Let $f(X) \in K[X]$ be a polynomial with no repeated roots and let $F$ be a splitting field for $f(X)$ over $K$. If $\phi : K \to L$ is a field isomorphism that maps $f(X)$ to $G(X) \in L[X]$ and $E$ is a splitting field for $g(X)$ over $L$, then there exist exactly $[F : K]$ isomorphisms $\theta : F \to E$ such that $\phi(a) = \theta(a)$ for all $a$ in $K$.

**Theorem.** Let $K$ be a field, let $f(X) \in K[X]$, and let $F$ be a splitting field for $f(X)$ over $K$. If $f(X)$ has no repeated roots, then $[GF(F/K)] = [F : F]$.

**Corollary.** Let $K$ be a finite field and let $F$ be an extension of $K$ with $[F : K] = \Delta$. Then $GF(F/K) = \Delta$ is a cyclic group of order $\Delta$.

Now assuming that there is a finite field and its elements are generated by the polynomial $g(X) = X^4 + X^3 + 1$, then the elements are given in *Table 1* below.

*Table 1: the finite field elements where the prime numbers are in bold*

| Power Form | Inverse Form | Polynomial Form | n-Tuple Form | Hexadecimal Form | Decimal Form |
|---|---|---|---|---|---|
| 0 | - | 0 | 0000 | 0 | 0 |
| 1 | $\alpha^{-15}$ | 1 | **0001** | **1** | **1** |
| $\alpha$ | $\alpha^{-14}$ | $\alpha$ | **0010** | **2** | **2** |
| $\alpha^2$ | $\alpha^{-13}$ | $\alpha^2$ | 0100 | 4 | 4 |
| $\alpha^3$ | $\alpha^{-12}$ | $\alpha^3$ | 1000 | 8 | 8 |
| $\alpha^4$ | $\alpha^{-11}$ | $\alpha^3 +1$ | 1001 | 9 | 9 |
| $\alpha^5$ | $\alpha^{-10}$ | $\alpha^3 +\alpha +1$ | **1011** | **B** | **11** |
| $\alpha^6$ | $\alpha^{-9}$ | $\alpha^3 +\alpha^2 +\alpha +1$ | 1111 | F | 15 |
| $\alpha^7$ | $\alpha^{-8}$ | $\alpha^2 +\alpha+1$ | **0111** | 7 | 7 |
| $\alpha^8$ | $\alpha^{-7}$ | $\alpha^3 +\alpha^2 +\alpha$ | 1110 | E | 14 |

(continued)

| Power Form | Inverse Form | Polynomial Form | n-Tuple Form | Hexadecimal Form | Decimal Form |
|---|---|---|---|---|---|
| $\alpha^9$ | $\alpha^{-6}$ | $\alpha^2 + 1$ | **0101** | **5** | **5** |
| $\alpha^{10}$ | $\alpha^{-5}$ | $\alpha^3 + \alpha$ | 1010 | A | 10 |
| $\alpha^{11}$ | $\alpha^{-4}$ | $\alpha^3 + \alpha^2 + 1$ | **1101** | **D** | **13** |
| $\alpha^{12}$ | $\alpha^{-3}$ | $\alpha + 1$ | **0011** | **3** | **3** |
| $\alpha^{13}$ | $\alpha^{-2}$ | $\alpha^2 + \alpha$ | 0110 | 6 | 6 |
| $\alpha^{14}$ | $\alpha^{-1}$ | $\alpha^3 + \alpha^2$ | 1100 | C | 12 |

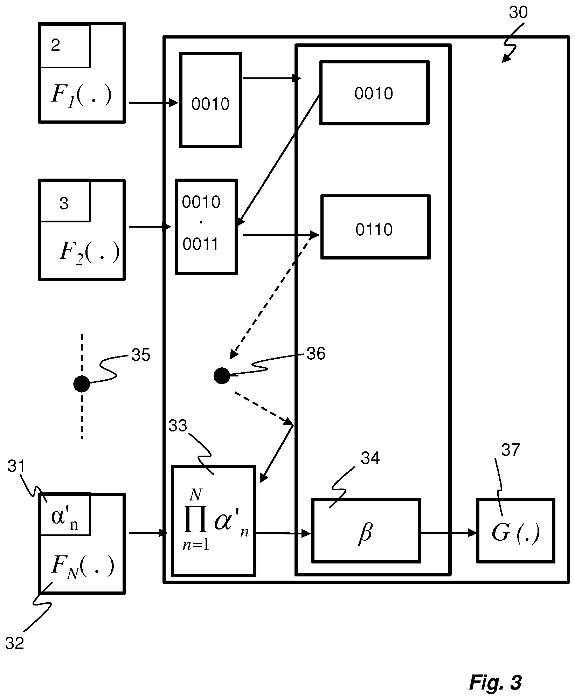

A blocksheet representation 30 of the method, and the controller programmed to execute the method, according to an embodiment is presented in Figure 3.

Assume that there are $N$ processing components, units of functions here called $F_n$ where $n \in [1, N]$ which are connected to each other in series, parallel or a combination of series and parallel. Each of the these contain a unique prime number $\{\alpha\}_{n=1}^N = \{2, 3, 5, 7, \ldots\}$ coded as a unique finite field element from the generated field $\{\alpha\}_{n=1}^{N} = \{0010, 0011, 0101, 0111, \ldots\}$ that acts as an ID for the actual $F_n$. Each unique label in the form of a finite field element is thus corresponding to a unique decimal form representation, i.e. a unique prime number. The number 1 is not used in the set of unique prime numbers, but the number 1 is used as error set value. In each step the prime numbers $\alpha'_n$ is multiplied by the product of prime numbers $\beta_{n-1}$ from the previous steps, $\alpha'_n \beta_{n-1}$ to produce $\beta_n$.

$\beta_n = \alpha'_n \beta_{n-1}$

These products are stored in a memory and virtually propagated to the next $F_n$. When all $F_n$ are executed and the final product is calculated then the final product is compared to an expected values.

Hence, the proposed method 30 comprises the following sub-functions, which also represent operating modules of the controller configured to perform the method:

In 31, a unique prime number label, $\alpha'_n$ in form of a finite field element, that act as ID for the actual function or unit $F_n$ and is used as a factor to produce the product by multiplication.

In 32, the function or unit that would be monitored is connected to the next function or unit in serial, parallel or in a combination of serial and parallel. The default output values from these function or unit is the finite field element 0001.

In 33, it is provided a multiplier function or unit that multiplies the product $\beta_{n-1}$ from the previous steps by the actual prime number, $\alpha'_n$ in form of a finite field element to form a new product $\beta_n$.

Reference numeral 34 represents a "hole less" memory unit or some other storage.

Reference numeral 35 represents the data path between the function or units *FN.*

Reference numeral 36 represents the product propagation to next functions or units from the data storage corresponding to the previous step.

Reference numeral 37 represents a fault comparator and unique factorisation unit being configured to determine if any functional units are faulty and if so, which units are faulty.

As mentioned above the functional units may be connected in series. The functional units may also be connected in parallel. The functional units may also be connected in a combination of series and parallel.

In an embodiment the functional units may be a subgroup selected from the functional units comprised in the vehicle control system. In such an embodiment the functional unit subgroup may be associated with a specific function of the vehicle. The functional unit subgroup may in an embodiment be associated with multiple related functions of the vehicle. The expected traversal value of the functional unit subgroup is the product of the unique label of each of the functional units comprised in the functional unit subgroup.

One unique factorisation algorithm is described hereafter. If the final product, $\beta_N$, of unique labels in the form of finite field element is equal to the expected value then there is no faults.

If the final product $\beta_N$ of unique labels in the form of finite field element is unequal to the expected value then there is one or more faults.

The following procedure is used to figure out where the faults occur:

In a first step, to figure out where the faults have occurred the final product is divided by the first and least common

finite field element $\alpha'_1 = 0010$.

In a second step, if the quotine is unequal to a finite field element in the given set then the procedure is continued by a yet further division by the next finite field element. In another case, if the quotine is a finite field element in the given set then the iteration is interrupted. The procedure for detecting faults by factorization can be described by the following algorithm:

$$\alpha'_1 = 0010.$$

$$\frac{\beta_N}{\alpha'_1} \to \gamma_1$$

For $n = 1$ to $N$

$$\frac{\gamma_{n-1}}{\alpha'_n} \to \gamma_n$$

End

Once the procedure above is performed, fault detection is continued by performing a comparison by checking the difference between the complete used set of finite field elements and the set of obtained finite field elements during the iteration. The result of the comparison, i.e. the missing elements, represent the ID(s) for the faulty functions or units.

As explained above the vehicle control system may also comprise subsystems being associated with vehicle hardware. In such a case the subsystems comprise the functional units. For example, a drivetrain subsystem could comprise multiple functional units associated with of the combined pieces of hardware associated with the vehicle's drivetrain.

If the functional units are comprised in subsystems then the method of detecting faults may further comprise associating the functional units with the comprising subsystem.

The method of detecting faults in a vehicle control system may also comprise a step for determining which hardware component is associated with a functional unit. The method can comprise accessing a list associating a hardware descriptor to a functional unit. The list may comprise a sequence of unique labels as described aboev, being the unique labels of the function units. The list may also comprise a text-based or other descriptor of which vehicular hardware component is related to each unique label. The descriptor could be any machine or human readable descriptor or ID of a vehicular hardware component.

Also disclosed herein is a controller for detecting faults in a vehicle control system, wherein the system comprises functional units. For identification each of the functional units of the vehicle control system can be assigned a unique label in the form of a finite field element in accordance with the description above.

The controller for detecting faults thus also comprises a means of calling the functional units wherein the call to the functional unit comprises, a readable and updateable traversal value for enabling identification of which functional units are faulty.

The controller comprises a means of, in case the functional unit is operating correctly, updating the traversal value based on the unique label of the currently called functional unit, and in the case of a fault, not updating the traversal value.

The controller further detects whether the functional units are faulty as it is provided with means of comparing the traversal value with an expected traversal value, and a means of determining which functional units are faulty. In case the traversal value is equal to the expected traversal value then no faults have been detected in the vehicle control system. In the case that the traversal value is not equal to the expected traversal value the controller determines that one or more faults are present in the vehicle control system. The controller can determine which functional units are faulty by the unique factorisation algorithm.

A vehicle may comprise a system comprising at least one hardware component of a vehicle associated with one or more functional units and a controller according to the description above. For example a system could comprise a hardware component such as a brake actuation sensor, a controller as described above, and at least one functional unit. The system may further comprise a list associating a hardware component descriptor to a functional unit.

A processing unit is responsible for the overall operation and control of the method. The processing unit may be implemented in any known controller technology, including but not limited to a processor (PLC, CPU, DSP), FPGA, ASIC or any other suitable digital and/or analogue circuitry capable of performing the intended functionality. The processing unit constitutes an implementation of the method described herein.

Finally, the system and controller may have a memory which is operatively connected to the processing unit. The memory may be implemented by any known memory technology, including but not limited to E(E)PROM, S(D)RAM and flash memory, and it may also include secondary storage such as a magnetic or optical disc. Physically, the memory may consist of one unit or a plurality of units which together constitute the memory on a logical level. In addition to storing various program instructions and data for the various functions and applications which are typically available, the memory also comprises program instructions and work data for a control software application executed in the controller, system or processing unit.

Although the present invention has been described above with reference to specific embodiments, it is not intended to be limited to the specific form set forth herein. Rather, the invention is limited only by the accompanying claims.

**Claims**

1.  A method (10) for detecting faults in a vehicle control system comprising functional units, each functional unit having an associated unique label in the form of a finite field element, the method comprising:

    calling (12, 14), by a controller of the vehicle control system, each of the functional units, the call comprising a readable traversal value, wherein the traversal value which is provided (14) to the first functional unit during fault detection is a finite field element corresponding to the unique decimal form representation of the prime number one,
    in case the functional unit is operating correctly, updating (16), by the called functional unit, the traversal value by multiplying the traversal value in the call by the unique label of the currently called functional unit such that the multiplication results in a product which is the product of the called functional unit's unique label and the product of all unique labels of the functional units previously called that were without error; and
    determining (18), by the controller of the vehicle control system, from the updated traversal value if any functional units are faulty by a comparison with an expected traversal value, wherein the expected traversal value is a product of all unique labels of functional units in the vehicle control system in which faults are to be detected.

2.  The method (10) according to claim 1, further comprising, in the case that the traversal value is not equal to the expected value, determining which functional units are faulty by a finite field element factorization algorithm.

3.  The method (10) according to claim 2, further comprising determining any missing unique label(s) by means of said finite field element factorization algorithm.

4.  The method (10) according to any one of the preceding claims, further comprising accessing a list, the list associating a descriptor of a functional unit to a unique label, to determine the descriptor of any faulty functional unit(s).

5.  The method (10) according to any one of the preceding claims, wherein each unique element is generated by a polynomial.

6.  The method (10) according to claim 5, wherein the polynomial is $g(X) = X^4 + X^3 + 1$.

7.  The method (10) according to any one of the preceding claims, wherein each unique label corresponds to a unique decimal form representation, each unique decimal form representation is a prime number.

8.  The method (10) according to claim 7, wherein the unique decimal form representations are associated according to the ascending sequence of prime numbers starting at the number 2.

9.  The method (10) according to claim 7 or 8, wherein a unique prime number is excluded from the set of prime numbers forming the unique decimal form representations.

10.  The method (10) according to any one of the preceding claims, wherein the vehicle control system comprises two or more functional units.

11.  The method (10) according to any one of the preceding claims, wherein the vehicle control system further comprises subsystems being associated with vehicle hardware, wherein the subsystems comprise the functional units, the method further comprising associating the functional units with the comprising subsystem.

EP 3 287 859 B1

12. The method (10) according to any one of the preceding claims, wherein a functional unit subset is selected from the functional units comprised in the vehicle control system, and wherein the expected traversal value of the functional unit subset is the product of the unique label of each of the functional units comprised in the functional unit subset.

13. A method (20) for providing at least one functional unit, wherein the method comprises assigning (24) a unique label in the form of a finite field element to a functional unit.

14. A controller for detecting faults in a vehicle control system comprising functional units, wherein each of the functional units of the vehicle control system are assigned a unique label in the form of a finite field element, the controller for detecting faults comprising:

a means of calling the functional units wherein the call to the functional unit comprises a readable traversal value, wherein the traversal value which is provided (14) to the first functional unit during fault detection is a finite field element corresponding to the unique decimal form representation of the prime number one,
a means of, in case the functional unit is operating correctly, updating the traversal value by multiplying the traversal value in the call by the unique label of the currently called functional unit such that the multiplication results in a product which is the product of the called functional unit's unique label and the product of all unique labels of the functional units previously called that were without error, and
a processing unit programmed to determine which if any of the functional units are faulty by a comparison between the updated traversal value and an expected traversal value, wherein the expected traversal value is a product of all unique labels of functional units in the vehicle control system in which faults are to be detected.

15. The controller according to claim 14, wherein, if the updated traversal value is not equal to the expected traversal value, the processing unit is further programmed to determine which functional units are faulty by a finite field element factorization algorithm.

16. A system comprising a hardware component of a vehicle being associated with one of more functional units and a controller according to claim 14 or 15.

**Patentansprüche**

1. Verfahren (10) zum Erkennen von Fehlern in einem Fahrzeugsteuersystem, das Funktionseinheiten umfasst, wobei jede Funktionseinheit eine zugehörige eindeutige Kennzeichnung in Form eines endlichen Feldelements aufweist, welches Verfahren umfasst:

Aufrufen (12, 14) jeder der Funktionseinheiten durch eine Steuereinheit des Fahrzeugsteuersystems, wobei das Aufrufen einen auslesbaren Durchlaufwert umfasst, wobei der Durchlaufwert, der der ersten Funktionseinheit während der Fehlererkennung zur Verfügung gestellt wird (14), ein endliches Feldelement ist, das der eindeutigen Dezimalformdarstellung der Primzahl Eins entspricht,
falls die Funktionseinheit korrekt arbeitet, Aktualisierung (16) des Durchlaufwerts durch die aufgerufene Funktionseinheit durch Multiplikation des Durchlaufwerts im Aufrufen mit der eindeutigen Kennzeichnung der aktuell aufgerufenen Funktionseinheit, so dass die Multiplikation ein Produkt ergibt, das das Produkt der eindeutigen Kennzeichnung der aufgerufenen Funktionseinheit und das Produkt aller eindeutigen Kennzeichnungen der zuvor aufgerufenen Funktionseinheiten ist, die fehlerfrei waren; und
Bestimmen (18), durch die Steuereinheit des Fahrzeugsteuersystems, aus dem aktualisierten Durchlaufwert, ob irgendwelche Funktionseinheiten fehlerhaft sind, durch einen Vergleich mit einem erwarteten Durchlaufwert, wobei der erwartete Durchlaufwert ein Produkt aller eindeutigen Kennzeichnungen von Funktionseinheiten in dem Fahrzeugsteuersystem ist, worin Fehler zu erkennen sind.

2. Verfahren (10) nach Anspruch 1, ferner umfassend, falls der Durchlaufwert nicht gleich dem erwarteten Wert ist, das Bestimmen durch einen Faktorisierungsalgorithmus mit endlichen Feldelementen, welche Funktionseinheiten fehlerhaft sind.

3. Verfahren (10) nach Anspruch 2, das ferner die Bestimmung jeglicher fehlender eindeutiger Kennzeichnung(en) mit Hilfe des Faktorisierungsalgorithmus mit endlichen Feldelementen umfasst.

4. Verfahren (10) nach einem der vorhergehenden Ansprüche, ferner umfassend den Zugriff auf eine Liste, wobei die Liste einen Deskriptor einer Funktionseinheit mit einer eindeutigen Kennzeichnung verknüpft, um den Deskriptor einer oder mehrerer fehlerhafter Funktionseinheiten zu bestimmen.

5. Verfahren (10) nach einem der vorhergehenden Ansprüche, wobei jedes eindeutige Element durch ein Polynom erzeugt wird.

6. Verfahren (10) nach Anspruch 5, wobei das Polynom $g(X) = X^4 + X^3 + 1$ ist.

7. Verfahren (10) nach einem der vorhergehenden Ansprüche, wobei jede eindeutige Kennzeichnung einer eindeutigen Dezimalformdarstellung entspricht, jede eindeutige Dezimalformdarstellung eine Primzahl ist.

8. Verfahren (10) nach Anspruch 7, wobei die eindeutigen Dezimalformdarstellungen entsprechend der aufsteigenden Folge von Primzahlen, beginnend mit der Zahl 2, zugeordnet werden.

9. Verfahren (10) nach Anspruch 7 oder 8, wobei eine eindeutige Primzahl aus der Menge der Primzahlen, die die eindeutigen Dezimalformdarstellungen bilden, ausgeschlossen wird.

10. Verfahren (10) nach einem der vorhergehenden Ansprüche, wobei das Fahrzeugsteuersystem zwei oder mehr Funktionseinheiten umfasst.

11. Verfahren (10) nach einem der vorhergehenden Ansprüche, wobei das Fahrzeugsteuersystem ferner Teilsysteme umfasst, die mit der Fahrzeughardware verknüpft sind, wobei die Teilsysteme die Funktionseinheiten umfassen, wobei das Verfahren ferner das Verknüpfen der Funktionseinheiten mit dem umfassenden Teilsystem umfasst.

12. Verfahren (10) nach einem der vorhergehenden Ansprüche, wobei eine Untergruppe von Funktionseinheiten aus den im Fahrzeugsteuersystem enthaltenen Funktionseinheiten ausgewählt wird, und wobei der erwartete Durchlaufwert der Untergruppe von Funktionseinheiten das Produkt der eindeutigen Kennzeichnung jeder der Funktionseinheiten, die in der Untergruppe von Funktionseinheiten enthalten sind, ist.

13. Verfahren (20) zum Bereitstellen mindestens einer Funktionseinheit, wobei das Verfahren das Zuweisen (24) einer eindeutigen Kennzeichnung in Form eines endlichen Feldelements zu einer Funktionseinheit umfasst.

14. Steuereinheit zum Erkennen von Fehlern in einem Fahrzeugsteuersystem, das Funktionseinheiten umfasst, wobei jeder der Funktionseinheiten des Fahrzeugsteuersystems eine eindeutige Kennzeichnung in Form eines endlichen Feldelements zugewiesen ist, wobei die Steuereinheit zum Erkennen von Fehlern umfasst:

ein Mittel zum Aufrufen der Funktionseinheiten, wobei das Aufrufen der Funktionseinheit einen lesbaren Durchlaufwert umfasst, wobei der Durchlaufwert, der der ersten Funktionseinheit während der Fehlererkennung zur Verfügung gestellt wird (14), ein endliches Feldelement ist, das der eindeutigen Dezimalformdarstellung der Primzahl Eins entspricht,
ein Mittel, um, falls die Funktionseinheit korrekt arbeitet, den Durchlaufwert zu aktualisieren, indem der Durchlaufwert im Aufrufen mit der eindeutigen Kennzeichnung der aktuell aufgerufenen Funktionseinheit multipliziert wird, so dass die Multiplikation ein Produkt ergibt, das das Produkt aus der eindeutigen Kennzeichnung der aufgerufenen Funktionseinheit und das Produkt aller eindeutigen Kennzeichnungen der zuvor aufgerufenen Funktionseinheiten, die fehlerfrei waren, ist, und
eine Verarbeitungseinheit, die so programmiert ist, dass sie durch einen Vergleich zwischen dem aktualisierten Durchlaufwert und einem erwarteten Durchlaufwert bestimmt, welche der Funktionseinheiten fehlerhaft ist, wobei der erwartete Durchlaufwert ein Produkt aller eindeutigen Kennzeichnungen von Funktionseinheiten in dem Fahrzeugsteuersystem ist, worin Fehler zu erkennen sind.

15. Steuereinheit nach Anspruch 14, wobei, falls der aktualisierte Durchlaufwert nicht gleich dem erwarteten Durchlaufwert ist, die Verarbeitungseinheit ferner so programmiert ist, dass sie durch einen Faktorisierungsalgorithmus mit endlichen Feldelementen bestimmt, welche Funktionseinheiten fehlerhaft sind.

16. System, das eine Hardwarekomponente eines Fahrzeugs umfasst, die mit einer oder mehreren Funktionseinheiten und einer Steuereinheit nach Anspruch 14 oder 15 verknüpft ist.

**EP 3 287 859 B1**

**Revendications**

1. Procédé (10) de détection de défauts dans un système de commande de véhicule comprenant des unités fonctionnelles, chaque unité fonctionnelle ayant une étiquette unique associée dans la forme d'un élément de champ fini, le procédé comprenant les étapes consistant à :

   appeler (12, 14), par un contrôleur du système de commande de véhicule, chacune des unités fonctionnelles, l'appel comprenant une valeur de traversée lisible, la valeur de traversée qui est fournie (14) à la première unité fonctionnelle pendant la détection de défauts étant un élément de champ fini correspondant à la représentation de forme décimale unique du nombre premier d'un,
   dans le cas où l'unité fonctionnelle fonctionnerait correctement, mettre à jour (16), par l'unité fonctionnelle appelée, la valeur de traversée en multipliant la valeur de traversée dans l'appel par l'étiquette unique de l'unité fonctionnelle actuellement appelée de telle sorte que la multiplication résulte en un produit qui est le produit de l'étiquette unique de l'unité fonctionnelle appelée et le produit de toutes les étiquettes uniques des unités fonctionnelles précédemment appelées qui étaient sans erreur ; et
   déterminer (18), par le contrôleur du système de commande de véhicule, à partir de la valeur de traversée mise à jour si des unités fonctionnelles quelconques sont défectueuses par une comparaison avec une valeur de traversée attendue, la valeur de traversée attendue étant un produit de toutes les étiquettes uniques d'unités fonctionnelles dans le système de commande de véhicule dans lequel des défaillances doivent être détectées.

2. Procédé (10) selon la revendication 1, comprenant en outre, dans le cas où la valeur de traversée ne serait pas égale à la valeur attendue, la détermination des unités fonctionnelles défectueuses par un algorithme de factorisation d'élément de champ fini.

3. Procédé (10) selon la revendication 2, comprenant en outre la détermination de toute(s) étiquette(s) unique(s) manquante(s) au moyen dudit algorithme de factorisation d'éléments de champ fini.

4. Procédé (10) selon l'une quelconque des revendications précédentes, comprenant en outre l'accès à une liste, la liste associant un descripteur d'une unité fonctionnelle à une étiquette unique, pour déterminer le descripteur de toute(s) unité(s) fonctionnelle(s) défectueuse(s).

5. Procédé (10) selon l'une quelconque des revendications précédentes, dans lequel chaque élément unique est généré par un polynôme.

6. Procédé (10) selon la revendication 5, dans lequel le polynôme est $g(X) = X^4 + X^3 + 1$

7. Procédé (10) selon l'une quelconque des revendications précédentes, dans lequel chaque étiquette unique correspond à une représentation sous forme décimale unique, chaque représentation sous forme décimale unique étant un nombre premier.

8. Procédé (10) selon la revendication 7, dans lequel les représentations sous forme décimale unique sont associées selon la séquence ascendante de nombres premiers commençant au nombre 2.

9. Procédé (10) selon la revendication 7 ou 8, dans lequel un nombre premier unique est exclu de l'ensemble de nombres premiers formant les représentations sous forme décimale unique.

10. Procédé (10) selon l'une quelconque des revendications précédentes, dans lequel le système de commande de véhicule comprend deux unités fonctionnelles ou plus.

11. Procédé (10) selon l'une quelconque des revendications précédentes, dans lequel le système de commande de véhicule comprend en outre des sous-systèmes associés au matériel de véhicule, les sous-systèmes comprenant les unités fonctionnelles, le procédé comprenant en outre l'association des unités fonctionnelles au sous-système compris.

12. Procédé (10) selon l'une quelconque des revendications précédentes, dans lequel un sous-ensemble d'unités fonctionnelles est sélectionné parmi les unités fonctionnelles comprises dans le système de commande de véhicule, et dans lequel la valeur de traversée attendue du sous-ensemble d'unités fonctionnelles est le produit de l'étiquette unique de chacune des unités fonctionnelles comprises dans le sous-ensemble d'unités fonctionnelles.

**13.** Procédé (20) destiné à fournir au moins une unité fonctionnelle, le procédé comprenant l'attribution (24) d'une étiquette unique sous la forme d'un élément de champ fini à une unité fonctionnelle.

**14.** Contrôleur destiné à détecter des défauts dans un système de commande de véhicule comprenant des unités fonctionnelles, chacune des unités fonctionnelles du système de contrôle de véhicule étant affectée d'une étiquette unique dans la forme d'un élément de champ fini, le contrôleur pour détecter des défauts comprenant :

un moyen d'appel des unités fonctionnelles, l'appel à l'unité fonctionnelle comprenant une valeur de traversée lisible, la valeur de traversée qui est fournie (14) à la première unité fonctionnelle pendant la détection de défauts étant un élément de champ fini correspondant à la représentation de forme décimale unique du nombre premier d'un,

un moyen, dans le cas où l'unité fonctionnelle fonctionnerait correctement, pour mettre à jour la valeur de traversée en multipliant la valeur de traversée dans l'appel par l'étiquette unique de l'unité fonctionnelle actuellement appelée de telle sorte que la multiplication résulte en un produit qui est le produit de l'étiquette unique de l'unité fonctionnelle appelée et le produit de toutes les étiquettes uniques des unités fonctionnelles précédemment appelées qui étaient sans erreur, et

une unité de traitement programmée pour déterminer si l'une quelconque des unités fonctionnelles est défectueuse par une comparaison entre la valeur de traversée mise à jour et une valeur de traversée attendue, la valeur de traversée attendue étant un produit de toutes les étiquettes uniques d'unités fonctionnelles dans le système de commande de véhicule dans lequel des défauts doivent être détectées.

**15.** Contrôleur selon la revendication 14, dans lequel, si la valeur de traversée mise à jour n'est pas égale à la valeur attendue, l'unité de traitement est en outre programmée pour déterminer quelles unités fonctionnelles sont défectueuses par un algorithme de factorisation d'élément de champ fini.

**16.** Système comprenant un composant matériel d'un véhicule étant associé à une ou plusieurs unités fonctionnelles et un contrôleur selon la revendication 14 ou 15.

```
         ┌──────────────────────────────────────┐
   12    │        Calling functional unit        │
         └──────────────────────────────────────┘
                            │
                            ▼
         ┌──────────────────────────────────────┐
   14    │        Sending traversal value        │
         └──────────────────────────────────────┘
                            │
                            ▼
         ┌──────────────────────────────────────┐
   16    │       Updating traversal value        │
         └──────────────────────────────────────┘
                            │
                            ▼
         ┌──────────────────────────────────────┐
   18    │    Determining faulty functional units │
         └──────────────────────────────────────┘
```

*Fig. 1*

```
         ┌──────────────────────────────────────┐
   22    │       Accessing functional unit       │
         └──────────────────────────────────────┘
                            │
                            ▼
         ┌──────────────────────────────────────┐
   24    │         Assigning unique label        │
         └──────────────────────────────────────┘
```

*Fig. 2*

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102010008471

- EP 2082375 A